**Europäisches Patentamt**

**European Patent Office**

**Office européen des brevets**

(11) Veröffentlichungsnummer: **0 027 857**
**B1**

(12) EUROPÄISCHE PATENTSCHRIFT

(45) Veröffentlichungstag der Patentschrift:
**26.02.86**

(21) Anmeldenummer: **80104459.5**

(22) Anmeldetag: **29.07.80**

(51) Int. Cl.⁴: **C 08 F 220/12, C 08 F 2/02 //**
**(C08F220/12, 220:06)**

(54) Verfahren zur Herstellung eines ionisch vernetzten Acrylkunststoffes.

(30) Priorität: **29.10.79 DE 2943566**

(43) Veröffentlichungstag der Anmeldung:
**06.05.81 Patentblatt 81/18**

(45) Bekanntmachung des Hinweises auf die Patenterteilung:
**26.02.86 Patentblatt 86/9**

(84) Benannte Vertragsstaaten:
**BE DE FR GB IT SE**

(56) Entgegenhaltungen:
**FR - E - 92 012**
**US - A - 2 502 411**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1 (DE)**

(72) Erfinder: **Besecke, Sigmund, Dr., Heidelberger Landstrasse 62, D-6100 Darmstadt 13 (DE)**
Erfinder: **Schröder, Günter, Dr., Leipziger Strasse 7, D-6105 Ober-Ramstadt (DE)**
Erfinder: **Gänzler, Wolfgang, Dr., Wixhäuser Strasse 11, D-6100 Darmstadt-Arheilgen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung eines ionisch vernetzten Acrylkunststoffes durch radikalische Polymerisation eines Monomerengemisches mit der im Oberbegriff des Hauptanspruches angegebenen Zusammensetzung in Substanz.

Vernetzte Polymere haben im allgemeinen eine höhere mechanische Festigkeit, eine erhöhte Erweichungstemperatur und eine verbesserte Beständigkeit gegen thermische Zersetzung und Korrosion als unvernetzte Polymere. Polymere mit ionischen Vernetzungsbrücken nehmen unter den vernetzten Polymeren insofern eine Sonderstellung ein, als sie bei schwacher Vernetzung noch eine begrenzte Thermoplastizität behalten und mit zunehmender Vernetzung eine besonders hohe thermische Beständigkeit erreichen lassen.

Matsuda und Dohu (Journ. Appl. Polymer Science 1973, 17, S. 2289 bis 2299) haben das Prinzip der ionischen Vernetzung an Acrylkunststoffen angewendet. Sie unterwarfen ein Gemisch von Methylmethacrylat und Metallsalzen des Äthylenglykol-methacrylat-monophthalats der radikalischen Polymerisation in Substanz und erhielten Produkte mit gegenüber reinem Polymethylmethacrylat verbesserten mechanischen, thermischen und Korrosions-Eigenschaften. Sie setzten vor allem Salze von mehrwertigen Metallkationen ein, z.B. solche des Aluminiums, Chroms, Eisens, Nickels, Kobals oder Kupfers. Die genannten Metallsalze sind zwar in Methylmethacrylat verhältnismäßig gut löslich, so daß sie sich leicht damit mischpolymerisieren lassen, jedoch sind sie so schwer zugänglich, daß sie als Ausgangsstoff für ein technisches Produkt nicht geeignet sind.

Aus der US—PS 3 493 550 sind ionisch vernetzte Mischpolymerisate aus Methylmethacrylat und Metallsalzen der Methacrylsäure von zahlreichen verschiedenen mehrwertigen Metallkationen bekannt. Man kann daraus ähnlich wie aus Polymethylmethacrylat-Kunststoffen Formkörper herstellen. Der Kunststoff, an dessen Aufbau etwa 0,5 bis 10 Gew.-% an Einheiten einer ungesättigten Carbonsäure in Form des Metallsalzes beteiligt sind, zeichnet sich durch verbesserte Eigenschaften aus, wie auch Matsuda und Dohu festgestellt hatten. Als ungesättigte Carbonsäure werden hier vor allem Acryl- oder Methacrylsäure eingesetzt. Die ionisch vernetzten Copolymerisate werden hergestellt, indem man zunächst ein Mischpolymerisat aus Methylmethacrylat und der ungesättigten Carbonsäure herstellt und dieses Mischpolymerisat in Form einer Lösung mit einer Metallverbindung umsetzt, wodurch das Metallsalz des Mischpolymerisats gebildet wird und ausfällt. Das ausgefällte Produkt wird dann von dem Lösungsmittel abgetrennt und durch Aufschmelzen zu einer Formmasse verarbeitet. Dieses komplizierte Verfahren ist für die Herstellung technisch verwendbarer Kunststoffe zu aufwendig und zu teuer.

Etwas einfacher ist das von L. E. Nielson (Polymer. Engineering Science, 1969, 9, S. 356 bis 359) beschriebene Verfahren, bei dem man ein Mischpolymerisat aus Acrylsäure und einem Acrylester mit einem Metalloxid, beispielsweise Zinkoxid, bei hohen Temperaturen umsetzt. Dabei tritt Salzbildung zwischen der Acrylsäure und dem Metall ein. Die erhaltenen Produkte haben eine eher stein- als kunststoffartige Beschaffenheit; sie erweichen nicht beim Erhitzen und sind nicht thermoplastisch verarbeitbar. Obwohl sie für manche Anwendungszwecke als Werkstoffe geeignet sein mögen, stellen sie keine Lösung der Aufgabe her, ionisch vernetzte Acrylkunststoffe unter Erhalt der wesentlichen Kunststoffeigenschaften herzustellen.

H. P. Brown (Rubber Chemistry and Technology, Vol. 36 (4) 1963, Seiten 931—962) beschreibt die Herstellung von ionisch vernetzten Elastomeren. Mischpolymerisate von Butadien und Methacrylsäure werden mit Verbindungen mehrwertiger Metallkationen umgesetzt. Auch hier werden Polymerisation und Vernetzung in zwei getrennten Verfahrensstufen durchgeführt.

Auf technisch einfache Weise wurden ionisch vernetzte Acrylkunststoffe gemäß der FR—PS 92 012 (Zusatz zu FR—PS 1 502 901) hergestellt. Durch Copolymerisation von Methacrylnitril, Methylacrylsäure und Metallsalzen ungesättigter copolymerisierbarer Carbonsäuren in Substanz wurden unmittelbar ionisch vernetzte Kunststoffe erhalten. Die stark polaren Monomeren begünstigen die Löslichkeit der Metallsalze, ergeben allerdings ein Copolymerisat, dessen Eigenschaften durch den polaren Charakter der eingesetzten Monomeren geprägt ist. Beim Erhitzen wird das Polymerisat in ein ionisch vernetztes Polymethacrylamid umgewandelt, das einige sehr wertvolle Kunststoffeigenschaften aufweist, aber von den typischen Eigenschaften der aus Acrylestern aufgebauten Kunststoffe erheblich abweicht.

Acryl- und Methacrylesterpolymere, die durch Einheiten des Zirkonylmethacrylats vernetzt sind, werden nach US—PS 2 502 411 unmittelbar durch Mischpolymerisation der entsprechenden Ester mit Zirkonylmethacrylat, das in den Estern löslich ist, erhalten. Diese Salze leiten sich von dem zweiwertigen Zirkonylion ($ZrO^{2-}$) ab und lassen daher nur einer teilweise Ausnutzung der hohen Vernetzungsfähigkeit von vierwertigem Zirkon zu. Der Gelbstich der damit hergestellten Polymerisate ist bei der Herstellung hochwertiger organischer Gläser störend.

Die Erfindung geht von der Aufgabe aus, ionisch vernetzte Acrylkunststoffe ohne die Nachteile der nach dem Stand der Technik herstellbaren Produkte aus dem im Oberbegriff des Hauptanspruches angegebenen Monomerengemisch in einer einzigen Verfahrensstufe durch Polymerisation in Substanz herzustellen. Eine solche unmittelbare Herstellung in Substanz bietet für die technische Erzeugung von Kunststoffen besondere Vorteile. Obwohl die technisch vorteilhaften Eigenschaften ionisch vernetzter Acrylkunststoffe seit langem bekannt sind, ist man zu ihrer Herstellung entweder den technisch aufwendigen Umweg über die polymeranaloge Umsetzung carboxylgruppenhaltiger Mischpolymerisate mit Metallverbindungen gegangen oder man hat kompliziert aufgebaute salzartige Monomere hergestellt, die sich in Methylmethacrylat leicht lösen und damit copolymerisieren lassen.

Es wurde nun ein Verfahren zur Herstellung eines ionisch vernetzten Acrylkunststoffes gefunden, bei dem ein Monomerengemisch aus

a) mindestens 50 Gew.-% Alkylestern der Acryl- oder Methacrylsäure mit 1 bis 18 C-Atomen im Alkylrest oder Gemischen derartiger Ester,

b) 0,1 bis 50 Gew.-% mindestens eines Salzes der Acryl- und/oder Methacrylsäure mit einem Metallkation von einem der Elemente Zink, Aluminium, Zinn, Blei, Titan, Zirkon und Hafnium oder eines beim Erhitzen in ein solches Salz übergehenden Gemisches aus Acryl- und/oder Methacrylsäure und einer in dem gesamten Monomerengemisch wenigstens bei der Polymerisationstemperatur löslichen Verbindung eines der genennten Elemente,

c) gegebenenfalls bis zu 20 Gew.-% weiteren Comonomeren, die mit den unter a) und b) genannten Monomeren bzw. mit der in b) enthaltenen Acryl- und/oder Methacrylsäure mischpolymerisierbar sind,

radikalisch in Substanz polymerisiert wird. Erfindungsgemäß wird als Komponente b) ein Salz der Acryl- und/oder Methacrylsäure oder ein Gemisch dieser Säuren und der Verbindung eines der genannten Elemente eingesetzt, worin die Zahl der Säureäquivalente den Ladungsäquivalenten der Metall-Kationen wenigstens gleich ist. Überraschenderweise sind viele der Metallsalze von zwei- oder mehrwertigen Kationen mit Acryl- oder Methacrylsäure in den Estern dieser Säure in solchem Maße löslich, daß sich ionisch vernetzte Kunststoffe damit herstellen lassen. In anderen Fällen lassen sich in dem Gemisch aus Acryl- oder Methacrylsäure und deren Estern Metallverbindungen lösen, die während der Polymerisation oder gegebenenfalls bei Erhitzen des Polymerisats nach der Polymerisation als Vernetzungsbrücken wirkende Metallsalze bilden. Man kann infolgedessen von technisch leicht zugänglichen Ausgangsstoffen ausgehend unmittelbar durch Polymerisation in Substanz, allenfalls durch eine thermische Nachbehandlung, wie sie bei der thermoplastischen Verarbeitung ohnehin vorgenommen wird, zu den ionisch vernetzten Kunststoffen mit ihren bekannten Vorzügen gelangen.

Die Polymerisation in Substanz kann in der dafür üblichen Weise durchgeführt werden. Man verwendet in Mengen von beispielsweise 0,1 bis 5 Gew.-% radikalbildende Initiatoren, wie Dibenzoylperoxid, Dilauroylperoxid, tert.-Butylperbenzoat, -peroctoat oder -percarbonat, Cumolhydroperoxid, Azobis-isobuttersäuremethylester usw. Die Polymerisations-temperaturen liegen, je nach der Zerfallstemperatur des Initiators, im Bereich zwischen 30 und 120°C. Es ist zu beachten, daß in einigen Fällen die zugesetzten Metallsalze einen beschleunigenden Effekt auf den Initiator ausüben, wodurch die Polymerisation schon bei niedrigerer Temperatur in Gang kommt als in Abwesenheit der Metallverbindung.

Wenn die Polymerisation ohne besondere Zusätze durchgeführt wird, entstehen Kunststoffe, die beim Erhitzen thermoelastisch, aber nicht thermoplastisch werden. Ihre Molekulargewichte liegen im allgemeinen über 500.000, berechnet für das Hauptkettenpolymere ohne Berücksichtigung der Vernetzung über Metallsalzbrücken. Die Polymerisation zu hochmolekularen Produkten dieser Art wird vorzugsweise in Flachkammern durchgeführt, die aus zwei ebenen Platten in einem Abstand von vorzugsweise 2 bis 20 mm und einer dazwischen am Plattenrand umlaufenden elastischen Dichtungsschnur aufgebaut sind. Sowohl die Flachkammerplatten als auch die Dichtungsschnüre bestehen aus einem gegenüber dem Monomerengemisch inerten Werkstoff. Vorzugsweise werden Glasplatten und PVC-Dichtungsschnüre verwendet. Das entstehende Polymerisat hat dann die Form einer ebenen Platte, die im thermoelastischen Zustand 2- oder 3-dimensional umgeformt werden kann. Die bei der Herstellung und Verarbeitung von nicht-ionisch vernetztem Acrylglas gebräuchliche Arbeitsweise findet hier in praktisch unveränderter Form Anwendung.

Setzt man dem Monomerengemisch Kettenübertragungsregler, insbesondere Merkaptane, zu, so erhält man—ebenso wie in Abwesenheit der Metallverbindungen—Polymere mit einem Molekulargewicht, das je nach der Menge des mitverwendeten Reglers zwischen 50.000 und 200.000 liegen kann. Diese Polymerisate sind bei schwacher Vernetzung thermoplastisch auf Kalandern, Strangpressen oder Spritzgießmaschinen verarbeitbar. Es wird angenommen, daß sich die ionischen Vernetzungsbrücken unter den Bedingungen der thermoplastischen Verarbeitung zu lösen und nach der Umformung neu zu knüpfen vermögen.

Eine bemerkenswerte Eigenschaft der erfindungsgemäß hergestellten, ionisch vernetzten Polymerisate ist ihre hohe Beständigkeit gegen thermische Depolymerisation. Gegenüber unvernetzten oder kovalent vernetzten Kunststoffen fällt eine verminderte Oberflächenschädigung beim Erhitzen auf Oberflächentemperaturen von 200°C oder mehr auf. Selbst beim Erhitzen eines mit mindestens 0,5 Mol-% vierwertigen Metallkationen vernetzten Polymethylmethacrylats auf 300°C tritt unter günstigen Bedingungen keine Blasenbildung auf, und es zeigt sich in manchen Fällen gar keine, in anderen Fällen eine geringfügige Gelbfärbung.

Die Polymerisateigenschaften werden vorwiegend durch die Natur des Esterkomponente a) geprägt. Die bekannten Eigenschaften der Polymerisate von Acryl- oder Methacrylestern oder ihrer Gemische werden auch durch das Verfahren der Erfindung erhalten, jedoch sind die Eigenschaften infolge der Vernetzung modifiziert. Man beobachtet eine erhöhte Zug-, Biege- und Schlagzähigkeit, höhere Härte und Druckfestigkeit, sowie eine verbesserte Beständigkeit gegen kochendes Wasser und organische Lösungs- und Korrosionsmittel. Diese Eingenschaftsverschiebung tritt sowohl bei harten Kunststoffen, die aus niederen Estern der Metacrylsäure, insbesondere aus Methylmethacrylat, erhältlich sind, ein als auch bei Acrylesterpolymerisaten, die im unvernetzten Zustand weich und klebrig sind. Durch die erfindungsgemäße Vernetzung erhalten sie gummiähnliche Eigenschaften; d.h. sie verlieren ihre Klebrigkeit, behalten aber eine hohe Elastizität und Dehnbarkeit. Zu den bevorzugten Alkylestern der Acryl- oder Methacrylsäure gehören Methylmethacrylat, Äthylmethacrylat, n-Butylmethacrylat, Isobutylmethacrylat, Cyclohexylmethacrylat, Methylacrylat, Äthylacrylat, n-Butylacrylat und 2-Äthylhexyl-acrylat.

Als Comonomere, die in Mengen bis zu 20 Gew.-%, bezogen auf das Gesamtgewicht der Monomeren, mitverwendet werden können, seien Acryl- und Methacrylnitril, Acryl- und Methacrylamid, Hydroxyalkylester, Aminoalkylester und Aminoalkylamide der Acryl- oder Methacrylsäure, Vinylester, Styrol, Vinyltoluol, α-Methylstyrol, Vinylpyrrolidon und Vinylidenchlorid als Beispiele genannt. Es sei jedoch betont, daß die Mehrzahl der hier nicht genannten ungesättigten, radikalisch polymerisierbaren oder mischpolymerisierbaren Monomeren, die in der Literatur beschrieben sind, mitverwendet werden können.

Die als Komponente b) des eingesetzten Monomerengemisches verwendeten Metallsalze sind infolge unterschiedlicher Löslichkeit in dem Monomerengemisch untereinander nicht völlig gleichwertig. Am wenigsten bevorzugt sind die Metalle der zweiten Hauptgruppe, d.h. die Erdalkalimetalle, die als Acrylsäure- bzw. Methacrylsäure-Salze ziemlich wenig löslich sind. Die Magnesiumsalze sind in Gegenwart von Tetraalkyltitanaten löslich. Eine bevorzugte Gruppe von Metallkationen sind die der dritten bis fünften Hauptgruppe oder der zweiten bis sechsten Nebengruppe des Periodischen Systems sowie Magnesiumkationen. Diese Metallkationen sind zu einem großen Teil wenig oder gar nicht farbig und wirken in diesen Fällen auch nicht farbgebend auf das Polymerisat. Weiterhin haben sie keine ausgeprägten Redox-Eigenschaften und stören die Polymerisation nicht. Unter den Metallkationen dieser Gruppe sind wiederum die Kationen der Elemente Mg, Al, Sn, Pb, Zn, Ce, Ti, Zr, Hf, V und Cr bevorzugt. Unter diesen Metallen verursachen die $Cr^{3+}$-Kationen die stärkste Färbung; die damit vernetzten Mischpolymerisate sind blaugefärbt. Hinsichtlich der Löslichkeit, der Farblosigkeit und der Vernetzungswirkung sind die Kationen des Zinks, Aluminiums, Zinns, Bleis, Hafniums, Titans u. Zirkons besonders bevorzugt. Titan-, Zirkon- und Hafnium-Kationen neigen besonders stark zur Komplexbildung und lassen sich daher in gut lösliche Komplexverbindungen überführen, so daß diese Kationen für das Verfahren der Erfindung am meisten bevorzugt sind. Es können auch verschiedene Metallkationen nebeneinander eingesetzt werden.

Sofern die Metallsalze der Acryl- oder Methacrylsäure technisch zugänglich und in dem Monomerengemisch in ausreichender Konzentration löslich sind, können sie unmittelbar als Vernetzungsmittel eingesetzt werden. Beispiele für solche Salze sind Zink-acrylat und -methacrylat, Zirkon-acrylat und -methacrylat und Bleiacrylat und -methacrylat. In der Mehrzahl der Fälle sind allerdings die Metallsalze der Acryl- oder Methacrylsäure schwer darstellbar oder nicht in der erforderlichen Konzentration in dem Monomerengemisch löslich. In diesen Fällen wird freie Acryl- oder Methacrylsäure zusammen mit einer Verbindung des Metalls, die in dem Monomerengemisch in der erforderlichen Konzentration löslich ist, zur Polymerisation eingesetzt. Zu den Metallverbindungen, die in dem Monomerengemisch in Lösung gebracht werden können, gehören die Chloride, die Carbonate, die Salze von organischen Carbonsäuren, besonders die Acetylacetonate, und die Alkoholate, wie Propylate und Butylate. Bevorzugte Metallverbindungen sind die Acetylacetonate, Propylate, Butylate und Chloride des Chroms, Zirkons, Titans, Aluminiums und Zinks.

Häufig ist es nicht ohne weiteres feststellbar, in welcher Form das Metallkation während oder nach der Polymerisation gebunden ist. Die Umwandlung in vernetzungsbrückenbildende Carboxylate der Acryl- oder Methacrylsäure bzw. von deren einpolymerisierten Einheiten tritt in manchen Fällen erst beim Erhitzen auf Temperaturen über 100° ein. Man erkennt dies z.B. an einer Farbänderung oder an der Änderung der mechanischen oder Löslichkeits-Eigenschaften.

Durch die Menge des Metallsalzes lassen sich die Eigenschaften des entstehenden Polymerisats in weiteren Grenzen variieren, wobei ein thermisch reversibel vernetztes Material mit thermoplastischen Eigenschaften den unteren Grenzwert der Vernetzungsdichte und glasartig spröde, hochvernetzte Produkte den oberen Grenzwert markieren.

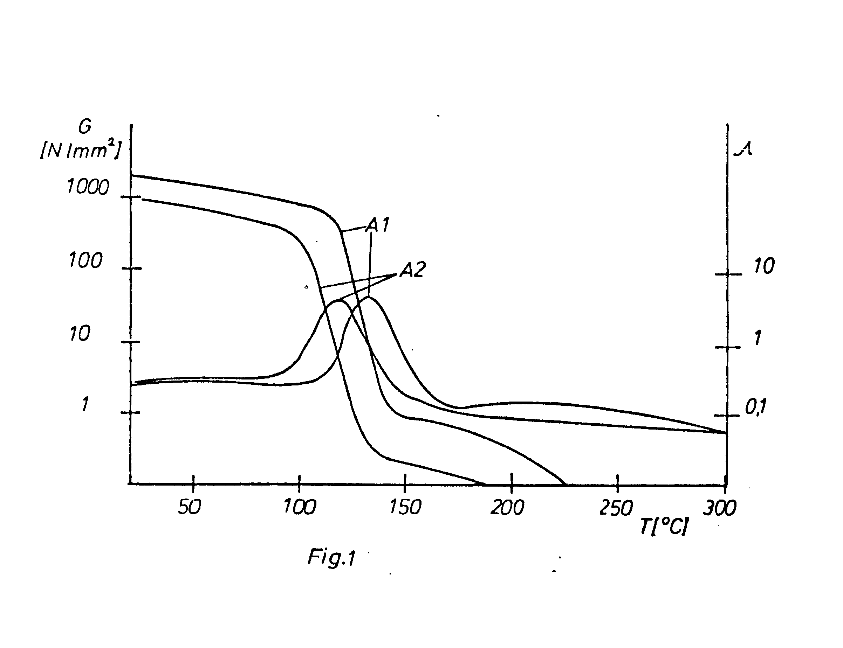

Der Einfluß der Vernetzungsdichte auf die thermischen Eigenschaften läßt sich an der Abhängigkeit des Schubmoduls (G) von der Temperatur (T) erkennen. In den Figuren 1 bis 4 sind die Schubmodulkurven von unvernetzten (Kurven A1 und A2), schwach vernetztem (Kurven B1 und B2), stärker vernetztem (Kurven C1 und C2) und hoch vernetztem (Kurven D1 und D2) Polymethylmethacrylat für jeweils zwei aufeinanderfolgende Messungen an der gleichen Probe (jeweils Kurven 1 und 2) dargestellt. Neben den Schubmodulkurven, die stetig abnehmen, sind jeweils die zugehörigen Kurven des logarithmischen Dämpfungsdekrements Λ eingezeichnet, die ein ausgeprägtes Maximum im Übergangsbereich vom Glaszustand in den thermoelastischen Bereich zeigen. Beide Kurven wurden beim Torsionsschwingungsversuch nach DIN 53455 aufgenommen.

Die Kurve A1 in Figur 1 zeigt das typische Verhalten eines Thermoplasten. Oberhalb der Glastemperatur sinkt der Schubmodul steil ab und ereeicht bei 140°C ein thermoelastisches Niveau. Beim weiteren Erhitzen geht die Probe allmählich in den thermoplastischen Zustand über, was durch ein weiteres Absinken des Schubmoduls zu erkennen ist. Bei der Wiederholung der Messung an der gleichen Probe setzt die G/T-Kurve (A2) bei einem deutlich niedrigeren Wert ein, was die thermische Schädigung bei den hohen Temperaturen im vorausgehenden Meßvorgang widerspiegelt. Der Steilabfall des Schubmoduls beginnt bei niedrigerer Temperatur und setzt sich fort bis zu einem Schubmodulwert, der weniger als die Hälfte des beim ersten Meßganges erreichten Wertes beträgt.

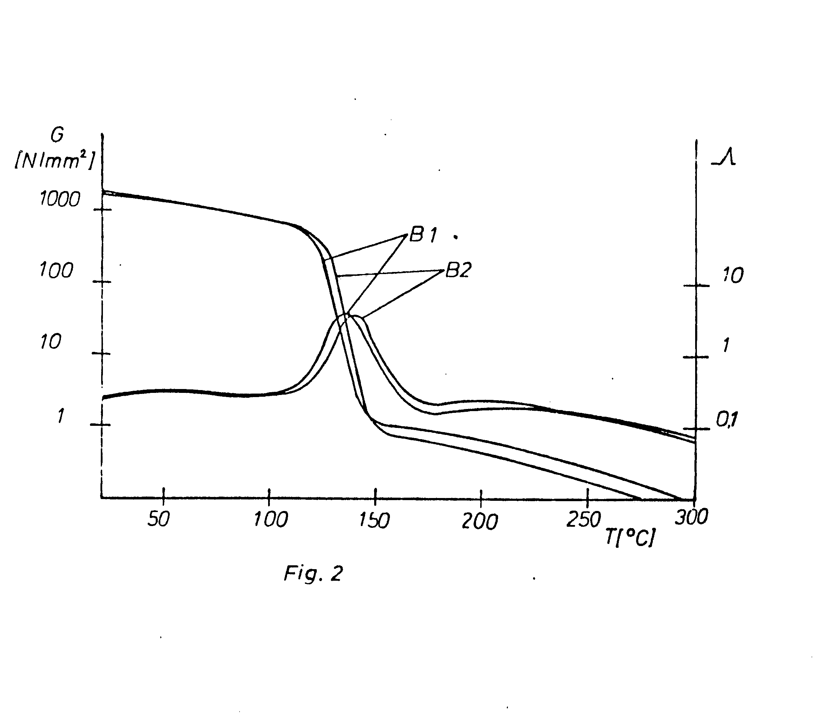

Schon durch eine schwache Vernetzung mit 0,2 Mol-% Zirkonacetylacetonat und 0,8 Mol Methacrylsäure ändert sich das thermische Verhalten, wie aus Figur 2, Kurve B1, zu ersehen ist. Der Steilabfall des Schubmoduls folgt zwar weitgehend der Kurve A1, jedoch erfolgt der Übergang in den thermoplastischen Zustand erst bei wesentlich höherer Temperatur. Besonders auffallend ist das Verhalten bei der Wiederholungsmessung (Kurve B2). Eine thermische Schädigung ist nicht zu erkennen, d.h. die thermischen Zustandsänderungen sind reversibel, der Steilabfall ist sogar zu noch etwas höheren Temperaturen verschoben.

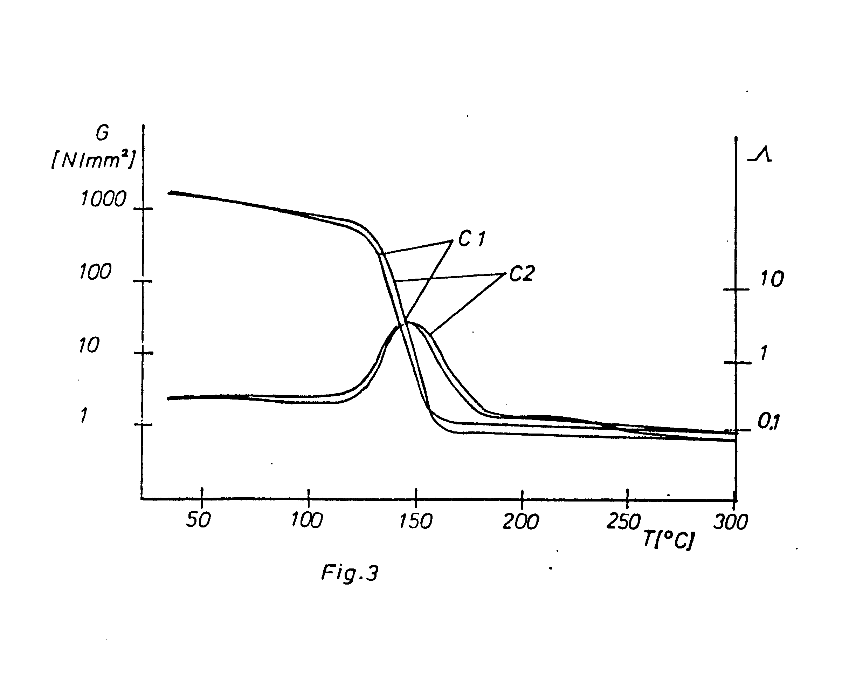

Noch deutlicher wird die thermische Stabilität bei der stärker vernetzten Probe von Figur 3 mit 2 Mol-% Zirkon-methacrylat. Die Temperatur des Steilabfalls ist gegenüber dem unvernetzten Material um 12 Grad erhöht. Das thermoelastische Niveau bleibt bis 300°C unverändert. Die nahezu deckungsgleichen Kurven C1 und C2 zeigen, daß eine thermische Schädigung selbst nach dem Erhitzen auf 300°C nicht eingetreten ist.

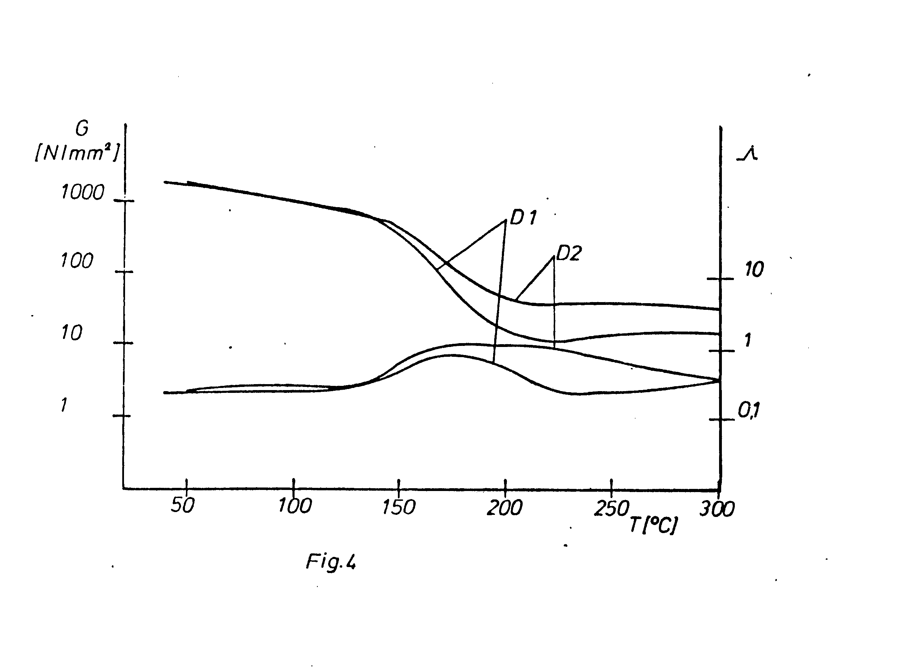

Figur 4 zeigt die G/T-Kurven eines mit 10 Mol-% Zirkonmethacrylat vernetzten Materials, das glasartig spröde ist. Infolge der hohen Vernetzungsdichte sinkt der Schubmodul beim Erhitzen nur langsam ab und erreicht erst bei etwa 200°C einen Endwert, der mehr als eine Zehnerpotenz über dem Wert im thermoelastischen Niveau des unvernetzten Polymerisats (Kurve A1) liegt. Der Anstieg der Schubmodulwerte im zweiten Meßdurchgang (Kurve D2) gegenüber dem ersten Durchgang (Kurve D1) läßt auf eine weitere Zunahme der Vernetzungsbrücken bei hohen Temperaturen schließen.

Sofern eine thermoplastische Verarbeitung des Polymerisats beabsichtigt ist, sollte der Anteil des vernetzungswirksamen Metallacrylats oder -methacrylats nicht über 1 Mol-% (berechnet auf die Molsumme der eingesetzten Monomeren), vorzugsweise nicht über 0,5 Mol-% gesteigert werden. Eine thermoelastische Verarbeitung, z.B. durch Recken, Teifziehen, Druckumformen u.dergl. ist bei einem Anteil des Metallacrylats oder -methacrylats bis zu etwa 5 bis 6 Mol-% mit herkömmlichen Umformvorrichtungen möglich. Bei höherer Vernetzungsdichte werden höhere Verarbeitungstemperaturen, höhere Umformkräfte oder beides erforderlich. Bei noch höherer Vernetzung beschränkt sich die thermische Verarbeitbarkeit auf das Biegen, bis schießlich bei der höchsten Vernetzungsdichte gar keine thermische Formgebung mehr möglich ist.

Beispiele 1 bis 28

100 Gewichtsteile Methacrylsäuremethylester wurden mit den in Tabelle 1 angegebenen Zusätzen vermischt. Nach Zugabe von 0,15 Gewichtsteilen tert.-Butylperpivalat wurde der Ansatz nach dem Kammerverfahren zwischen Glasplatten mit einer PVC-Distanzierschnur in 4 mm-Schichtdicke bei 40°C im Wasserbad während 24 h polymerisiert. Anschließend wurde die Kammer während 2 Stunden von 60 auf 120°C erhitzt und 2 Stunden bei 120°C belassen. Nach dem Abkühlen wurden die Polymerisate aus der Kammer entfernt und auf ihre physikalischen und mechanischen Eigenschaften mittels des Torsionsschwingungsversuches nach DIN 53445 untersucht.

In Tabelle 1 sind zu jeder Probe die in zwei aufeinanderfolgenden Meßgängen an der gleichen Probe ermittelten Werte für $T_{\Lambda max}$ und $T_{0,1}$ in °C angegeben. Dabei ist $T_{\Lambda max}$ die Temperatur, bei der die $\Lambda$/T-Funktion durch ein Maximum geht, d.h. die Temperatur des Übergangs vom Glaszustand in den thermoelastischen Zustand. Mit $T_{0,1}$ ist diejenige Temperatur bezeichnet, bei der der Schubmodul G den Wert von 0,1 N/mm² unterschreitet. Diese Temperatur kann als Übergang vom thermoelastischen in den thermoplastischen Zustand angesehen werden.

Die Abkürzung MA in Tabelle 1 bedeutet Methacrylsäure.

### TABELLE 1:
Torsionsschwingungsmessungen an Polymethylmethacrylat-
Systemen mit verschiedenen Zusätzen

| Vergleichs-beispiele Nr. | Metallzusatz | | | $T_{A_{max}}$ (°C) | | $T_{0,1}$ (°C) | |
| | Art | Menge | | | | | |
| | | (Gew.-%) | (Mol-%) | 1. Messung | 2. Messung | 1. Messung | 2. Messung |
|---|---|---|---|---|---|---|---|
| 1 | — | — | — | 132 | 117 | 232 | 188 |
| 2 | MA | 0,26 | 0,3 | 134 | 122 | 250 | 210 |
| 3 | MA | 1,07 | 1,2 | 139 | 123 | 236 | 208 |
| 4 | MA | 1,7 | 2 | 134 | 124 | 253 | 210 |
| 5 | MA | 2,6 | 3 | 136 | 128 | 242 | 205 |
| 6 | MA | 3,4 | 4 | 136 | 129 | 240 | 200 |

**Beisp. Nr.**

| | | | | | | | |
|---|---|---|---|---|---|---|---|
| 7 | Zink-neo-dekanoat +MA | 4,05 1,7 | 1 2 | 124 | 133 | 264 | 250 |
| 8 | Zink-acetyl-acetonat +MA | 2,6 1,7 | 1 2 | 133 | 139 | >300 | 275 |
| 9 | Aluminium-isopropylat +MA | 2 2,6 | 1 3 | 128 | 138 | 295 | 270 |
| 10 | Aluminium-acetylacetonat +MA | 3,3 2,6 | 1 3 | 132 | 143 | >300 | >300 |

| Beisp.-Nr. | Metallzusatz Art | Menge (Gew.-%) | (Mol-%) | $T_{\Lambda max}$ (°C) 1. Messung | 2. Messung | $T_{o,1}$ (°C) 1. Messung | 2. Messung |
|---|---|---|---|---|---|---|---|
| 11 | Titanyl-acetylacetonat | 0,8 | 0,3 | | | | |
|    | +MA | 1,07 | 1,2 | 130 | 138 | 265 | 240 |
| 12 | Titan(IV)-nonylat | 6,2 | 1 | | | | |
|    | +MA | 3,4 | 4 | 128 | 141 | >300 | >300 |
| 13 | Titan(IV)-methylat | 1,7 | 1 | | | | |
|    | +MA | 3,4 | 4 | 133 | 140 | >300 | >300 |
| 14 | Tributylzinn-acetat | 3,3 | 1 | | | | |
|    | +MA | 3,4 | 4 | 131 | 144 | 285 | 265 |
| 15 | Zirkon(IV)-propylat | 3,3 | 1 | | | | |
|    | +MA | 3,4 | 4 | 127 | 142 | >300 | >300 |
| 16 | Zirkon(IV)-acetylacetonat | 0,49 | 0,1 | | | | |
|    | +MA | 0,17 | 0,4 | 135 | 136 | 265 | 240 |
| 17 | Zirkon(IV)-acetylacetonat | 2,4 | 0,5 | | | | |
|    | +MA | 1,7 | 2 | 136 | 142 | >300 | >300 |

0 027 857

TABELLE 1: (contd.)

| Beisp.-Nr. | Art | Metallzusatz Menge (Gew.-%) | (Mol-%) | $T_{\Lambda_{max}}$ (°C) 1. Messung | 2. Messung | $T_{0.1}$ (°C) 1. Messung | 2. Messung |
|---|---|---|---|---|---|---|---|
| 18 | Zirkon(IV)-acetylacetonat +MA | 4,9 3,4 | 1 4 | 135 | 145 | >300 | >300 |
| 19 | Zirkon(IV)-chlorid +MA | 2,3 3,4 | 1 4 | 136 | 143 | >300 | >300 |
| 20 | Aluminium(III)-chlorid +MA | 1,3 2,6 | 1 3 | 128 | 140 | >300 | >300 |
| 21 | Zirkon(IV)-acrylat | | 5 | 136 | 143 | >300 | >300 |
| 22—26 | Zirkon(IV)-methacrylat | 1,7 3,5 4,3 8,6 43,1 | 0,4 0,8 1 2 10 | 139 141 142 144 174 | 137 141 142 147 178 | 260 >300 >300 >300 >300 | 235 290 >300 >300 >300 |
| 27 | Zirkon(IV)-methacrylat +MA | 4,3 8,6 | 1 10 | 153 | 145 | >300 | >300 |
| 28 | Hafnium(IV)-chlorid +MA | 3,2 3,4 | 1 4 | 135 | 141 | >300 | >300 |

Beispiele 29 und 30

100 Gewichtsteile Methacrylsäuremethylester, 2,58 Gewichtsteil Methacrylsäure, 1,315 Gewichtsteile Zink-acetylacetonat und 2,435 Gewichtsteile Zirkon(IV)-acetylacetonat wurden mit 0,15 Gewichtsteilen tert.-Butylperpivalat und 0,05 Gewichtsteilen tert.-Butylperoctoat als Initiatorsystem bei 50°C nach dem Kammerverfahren in 5 mm Schichtdicke polymerisiert und anschließend während 2 h von 60 auf 120°C erwärmt und weitere 2 Stunden bei dieser Temperatur belassen. Dieses Material war nach Differential-Thermo-Analyse bis 320°C thermostabil und begann sich erst oberhalb dieser Temperatur zu zersetzen (Beispiel 29).

Das vergleichbare Polymerisat ohne Metall-acetylacetonat-Zusatz zersetzte sich nach Differential-Thermo-Analyse bereits ab 205°C. (Beispiel 30).

Beispiele 31 und 32

128 Gewichtsteile Acrylsäurebutylester (Beispiel 31) bzw. ein Gemisch aus 128 Gewichtsteilen Acrylsäurebutylester, 15,32 Gewichtsteilen Zirkon(IV)-butylat und 11,52 Gewichtsteilen Acrylsäure (Beispiel 32) wurden jeweils unter Zusatz von 0,12 Gew.-% tert.-Butylperpivalat und 0,06 Gew.-% tert.-Butylperoctoat nach dem Kammerverfahren in 4 mm Schichtdicke bei 50°C polymerisiert. Die Polymerisate wurden während 2 Stunden von 60 auf 120°C hochgeheizt und 2 Stunden bei dieser Temperatur belassen.

Beispiel 31 ergab ein klebriges Material, das sich nach Differential-Thermoanalyse ab 330°C zersetzte. Das Polymerisat nach Beispiel 32 war elastisch und nicht klebrig; seine Zersetzung trat ab 370°C ein.

**Patentansprüche**

1. Verfahren zur Herstellung eines ionisch vernetzten Acrylkunststoffes durch radikalische Polymerisation eines Monomerengemisches aus
a) mindestens 50 Gew.-% Alkylestern der Acryl- oder Methacrylsäure mit 1 bis 18 C-Atomen im Alkylrest oder Gemischen derartiger Ester,
b) 0,1 bis 50 Gew.-% mindestens eines Metallsalzes der Acryl- und/oder Methacrylsäure mit einem Metallkation von einem der Elemente Zink, Aluminium, Zinn, Blei, Titan, Zirkon und Hafnium,
c) gegebenenfalls bis zu 20 Gew.-% weiteren Comonomeren, die mit den unter a) und b) genannten Monomeren bzw. mit der in b) enthaltenen Acryl- und/oder Methacrylsäure mischpolymerisierbar sind,
wobei die Polymerisation in Substanz durchgeführt wird, dadurch gekennzeichnet, daß als Metallsalz ein neutrales Salz oder ein beim Erhitzen in ein solches Salz übergehendes Gemisch aus Acryl- und/oder Methacrylsäure und einer in dem gesamten Monomergemisch wenigstens bei der Polymerisationstemperatur löslichen Verbindung des Metalls eingesetzt wird.
2. Verfahren nach Anspruch 1, dadurch gekennzeichnet, daß sich das Metallkation von den Elementen Zirkon, Hafnium oder Titan ableitet.
3. Verfahren nach den Ansprüchen 1 oder 2, dadurch gekennzeichnet, daß die Komponente b) 1 bis 20 Gew.-% der Masse ausmacht.
4. Verfahren nach den Ansprüchen 1 bis 3, dadurch gekennzeichnet, daß die Komponente a) überwiegend aus Methylmethacrylat besteht.
5. Verfahren nach den Ansprüchen 1 bis 4, dadurch gekennzeichnet, daß die Polymerisation in einer Flachkammer aus einem inerten Material, bestehend aus zwei parallel angeordneten Platten und einer dazwischenliegenden Randabdichtung, durchgeführt wird.

**Revendications**

1. Procédé pour la préparation d'un plastique acrylique réticulé ioniquement, par polymérisation radicalaire d'un mélange de monomères composé de:
a) au moins 50% en poids d'esters alkylés de l'acide acrylique ou méthacrylique comportant 1 à 18 atomes de C dans le radical alkyle ou de mélanges de tels esters,
b) 0,1 à 50% en poids d'au moins un sel métallique de l'acide acrylique et/ou méthacrylique avec un cation métallique de l'un des éléments zinc, aluminium, étain, plomb, titane, zirconium et hafnium,
c) le cas échéant, jusqu'à 20% en poids d'autres comonomères qui sont copolymérisables avec les monomères mentionnés en a) et b) ou avec l'acide acrylique et/ou méthacrylique contenu en b),
la polymérisation étant effectuée en masse, caractérisé en ce qu'on utilise, en tant que sel métallique, un sel neutre ou un mélange d'acide acrylique et/ou méthacrylique et d'un composé du métal soluble dans le mélange total de monomères au moins à la température de polymérisation, mélange qui se transforme en un tel sel au chauffage.
2. Procédé selon la revendication 1, caractérisé en ce que le cation métallique dérive des éléments zirconium, hafnium ou titane.
3. Procédé selon la revendication 1 ou 2, caractérisé en ce que le composant b) entre pour 1 à 20% en poids dans la composition de la masse.
4. Procédé selon l'une quelconque des revendications 1 à 3, caractérisé en ce que le composant a) est fait en majorité de méthacrylate de méthyle.
5. Procédé selon l'une quelconque des revendications 1 à 4, caractérisé en ce que la polymérisation est effectuée dans une chambre plate en un matériau inerte, formée de deux plaques disposées parallèlement et d'une garniture d'étanchéité du bord, placée entre ces plaques.

**Claims**

1. Process for preparing an ionically crosslinked acrylic plastics material by radical polymerisation of a monomer mixture of

a) at least 50% by weight of alkyl esters of acrylic or methacrylic acid having from 1 to 18 carbon atoms in the alkyl group or mixtures of such esters,

b) 0.1 to 50% by weight of at least one metal salt of acrylic and/or methacrylic acid with a metal cation of one of the elements zinc, aluminium, tin, lead, titanium, zirconium and hafnium,

c) optionally up to 20% by weight of other comonomers which are copolymerisable with the monomers mentioned in a) and b) or with the acrylic and/or methacrylic acid contained in b), the polymerisation being carried out as bulk polymerisation, characterised in that the metal salt used is a neutral salt or a mixture of acrylic and/or methacrylic acid and a compound of the metal which is soluble in the entire monomer mixture at least at the polymerisation temperature, the said mixture becoming a neutral salt when heated.

2. Process as claimed in Claim 1, characterised in that the metal cation is derived from the elements zironium, hafnium or titanium.

3. Process as claimed in Claim 1 or 2, characterised in that component b) constituents from 1 to 20% by weight of the mass.

4. Process as claimed in Claims 1 to 3, characterised in that component a) consists predominantly of methylmethacrylate.

5. Process as claimed in Claims 1 to 4, characterised in that the polymerisation is carried out in a flat chamber made of an inert material, consisting of two parallel plates and an edge seal located between them.

Fig.1

Fig. 2

Fig.3

Fig.4